**Europäisches Patentamt**

**European Patent Office**

**Office européen des brevets**

(19)

(11) Veröffentlichungsnummer: **0 090 316**
A2

# (12) EUROPÄISCHE PATENTANMELDUNG

(21) Anmeldenummer: **83102796.6**

(22) Anmeldetag: **21.03.83**

(51) Int. Cl.³: **C 09 J 5/08,** C 09 J 7/02,
C 09 J 3/00, H 02 G 1/14,
E 06 B 7/16, C 09 J 7/00,
E 04 D 3/38

(30) Priorität: **25.03.82 DE 3211067**

(43) Veröffentlichungstag der Anmeldung: **05.10.83**
**Patentblatt 83/40**

(84) Benannte Vertragsstaaten: **AT BE CH DE FR GB IT LI LU NL SE**

(71) Anmelder: **SIEMENS AKTIENGESELLSCHAFT, Berlin und München Wittelsbacherplatz 2, D-8000 München 2 (DE)**

(72) Erfinder: **Quella, Ferdinand, Dr., Parkstrasse 9, D-8035 Gauting (DE)**
Erfinder: **Steinwender, Bernd, Forstenrieder Allee 6 a, D-8000 München 71 (DE)**

(54) **Schäumbarer Schmelzkleber.**

(57) Schäumbarer Schmelzkleber bestehend aus einem handelsüblichen Schmelzkleber, dem ein Schäumzusatz in Form einer organischen Azoverbindung, z.B. Azodicarbonamid, zugesetzt ist. Dieser Kleber kann rein physikalisch schäumend, aber auch zusätzlich vernetzend, das heißt, verfestigend, wirken. Der Kleber nach der Erfindung kann z.B. bei der Kabelendisolierung, zum Ausfüllen beliebiger Zwischenräume, in der Baubranche zum Abdichten von Fenstern, Türen usw. Verwendung finden.

EP 0 090 316 A2

ACTORUM AG

## Schäumbarer Schmelzkleber.

Die Erfindung betrifft ein Verfahren zur Herstellung eines schäumbaren Schmelzklebers und die Verwendung dieses Erzeugnisses.

Schmelzkleber sind allgemein bekannt und z. B. in der DE-OS 2 347 799 beschrieben. Nachteil dieser Schmelzkleber ist, daß sie nicht in Ritzen eindringen. Es handelt sich bei dem in der DE-OS 2 347 799 beschriebenen Stand der Technik um Homo- oder Copolymere von z. B. Polyethylen, Polyamid und anderen, die zum Teil noch saure oder basische Gruppen tragen und noch klebrig machende Mittel enthalten.

Die Eigenschaften von Schmelzklebern und auch ihre chemische Zusammensetzung richtet sich jedoch immer stark nach dem Anwendungsfall. Im Prinzip können beliebige Thermoplaste als Schmelzkleber eingesetzt werden. Allgemeine Hinweise über Schmelzkleber sind z. B. in Römpp, Chemielexikon, gegeben.

Der Erfindung liegt die Aufgabe zugrunde, einen Kleber zu schaffen, der Hohlräume leicht ausfüllt und zu isolierenden Abdichtungen Verwendung finden kann. Diese Aufgabe wird mit einem schäumbaren Schmelzkleber gelöst, der aus einem handelsüblichen Schmelzklebergranulat mit einer Schmelztemperatur von ca. $100^{\circ}$C besteht und dem ein Schäumzusatz zugesetzt und die Mischung vor der Verarbeitung auf ca. $150^{\circ}$C erwärmt wird. Dieser schäumbare Schmelzkleber hat den Vorteil, daß er leicht in Hohlräume eindringt, sie ausfüllt und auch zu isolierenden Abdichtungen verwendbar ist.

Wed 1 Plr/24.3.1982

Weitere Ausgestaltungen dieses schäumbaren Schmelzklebers sind in den Ansprüchen 2 bis 5 beschrieben.

Der Schäumzusatz nach der Erfindung kann rein physikalisch schäumend wirken. Er kann aber auch, wie es bei den in den Unteransprüchen 2 bis 5 genannten Substanzen meist der Fall ist, zusätzlich vernetzend, das heißt im Erfindungssinn verfestigend auf die Verbindung wirken. Als Vernetzungshilfe kann aber auch ein im gleichen Temperaturbereich wirkendes Peroxid zugesetzt werden. In allen Fällen wird die Festigkeit erhöht und die Wasseraufnahme verringert.

Kabelverbindungsstellen und Kabelenden werden heute durch in der Wärme schrumpfende Polyethylenfolien oder Endstücke aus Polyethylen abgedeckt. An die offenen Kabelverbindungen darf jedoch auch bei leichtem Überdruck kein Wasser gelangen. Deshalb werden Zwischenräume, besonders zwischen zwei und mehr Kabelenden, z. B. mit Füllstücken in der Form des Zwischenraumes ausgefüllt. Diese Füllstücke bestehen z. B. auch aus Polyethylen. Zwischen Füllstück und Kabel bzw. Mantel ergeben sich allerdings Spalten, die auch nach dem Schrumpfen des Mantels nicht ganz dicht abschließen.

In der deutschen Patentanmeldung P 31 48 386.0 wird ein Verfahren beschrieben, bei dem diese Spalten durch Beschichten des Füllstückes mit Hilfe eines Schmelzklebers abgedichtet werden können. Der Schmelzkleber schmilzt beim heißen Schrumpfvorgang und verklebt die Spalten.

Nachteilig an diesem Verfahren ist, daß größere Zwischenräume, wie sie zum Beispiel durch Inhomogenitäten des Mantels oder bei einer Kabelbiegung auftreten, auch nicht abgedeckt bzw. ausgefüllt werden können.

Dieser Nachteil wird durch die erfindungsgemäße Verwendung eines schäumbaren Schmelzklebers beseitigt. Dieser Schmelzkleber muß folgende Eigenschaften aufweisen: er muß beim
Schrumpfvorgang aufschäumen und er darf nicht zu stark
schäumen, da der Schaum sonst ein gegebenenfalls vorhandenes Füllstück, insbesondere bei Kabelenden, aus der Verbindung herausdrückt.

Die Schrumpfungstemperatur mit der offenen Flamme beträgt
170°C und mehr. Handelsübliche Schmelzkleber beginnen ab
ca. 100°C zu schmelzen. Für die Schäumung benötigt man
einen Zusatz, der bei etwa 170°C gut schäumt. Geeignete Zusätze für diese Schäumungstemperatur sind organische Azoverbindungen wie Azodicarbonamid. Weitere geeignete, bei hohen
Temperaturen zerfallende Azoverbindungen sind in der Arbeit
von Braun, Brendlein und Quella in Monatshefte für Chemie,
110 (1979), Seite 699 ... 713, insbesondere Seite 705 (Tabelle 2), beschrieben. Dabei handelt es sich z. B. um die Verbindungen 1,1'-Diacetoxy-1,1'azocyclohexan, 2,2'-Diacetoxy-
2,2'-azopropan oder 4,4'Dimethyl-4,4'-azobutyrolacton, die
alle in einem relativ ähnlichen Temperaturbereich von 170 -
200°C zerfallen.

Die Einmischung und Beschichtung in Gegenwart dieser Substanzen erfolgt z. B. so: Man mischt zu einem handelsüblichen
Schmelzkleber-Granulat mit einer Schmelztemperatur von ca.
100°C eine Menge von 0,5 ... 10 % Massenanteil der pulverförmigen Azoverbindung und erwärmt die Mischung auf ca. 150°C.
Die Azoverbindung schäumt dabei praktisch noch nicht. Dadurch
erfolgt eine homogene Durchmischung. Bei dieser Temperatur
kann die Mischung über eine erhitzte Düse dünn auf das Füllstück oder die Mantelinnenseite aufgetragen werden. Gute
Schäumergebnisse wurden mit einer Konzentration von ca. 3 %
Massenanteil des Schäumzusatzes erhalten. Die zu wählende
Menge an Schäumzusatz hängt im einzelnen Fall davon ab, wie
lange die Temperatur einwirken kann; wie weit die Wärmequelle
von der Schäumstelle entfernt ist oder wie hoch die Wärmeleitfähigkeit des Materials ist. Die Vorteile dieser
Technik bestehen in einer Ausfüllung aller Hohlräume.

Die Technologie ist nicht auf Anwendungen auf dem Kabelsektor beschränkt. Die Abdichtung von Hohlräumen ist ein besonderes Problem auf dem Bausektor. Hohlräume werden hier sehr oft mit Polyurethanen ausgeschäumt. Probleme bestehen allerdings bei kleineren Ritzen, die mit dieser Technik nicht abgedichtet werden können.

Für diese Anwendung können Folien mit einem schäumenden Schmelzkleber einseitig beschichtet werden. Diese Folien lassen sich auf die Ritze drücken und mit einer Flamme klebend und dichtend anbringen.

Schäumende Schmelzkleber sind auch bei der Abdichtung von Geräten einsetzbar.

11 Patentansprüche

Patentansprüche

1. Verfahren zur Herstellung eines schäumbaren Schmelzklebers, d a d u r c h  g e k e n n z e i c h n e t ,
daß einem handelsüblichen Schmelzkleber-Granulat mit
einer Schmelztemperatur von ca. 100°C ein Schäumzusatz
zugesetzt und die Mischung vor der Verarbeitung bis auf
ca. 150°C erwärmt wird.

2. Verfahren nach Anspruch 1, d a d u r c h  g e -
k e n n z e i c h n e t ,  daß als Schäumzusatz eine
organische Azoverbindung, z. B. Azodicarbonamid, verwendet wird.

3. Verfahren nach Anspruch 1, d a d u r c h  g e -
k e n n z e i c h n e t ,  daß als Schäumzusatz 1,1'-
Diacetoxy-1,1'-azocyclohexan, 2,2'-Diacetoxy-2,2'-azo-
propan oder 4,4'-Dimethyl-4,4'-azobutyrolacton verwendet wird.

4. Verfahren nach Anspruch 1 bis 3, d a d u r c h
g e k e n n z e i c h n e t ,  daß als Vernetzungshilfe
ein im gleichen Temperaturbereich wirkendes Peroixd zugesetzt wird.

5. Verwendung eines schäumbaren Schmelzklebers nach den
Ansprüchen 1 bis 4 zur Kabelendisolierung.

6. Verwendung eines schäumbaren Schmelzklebers nach den
Ansprüchen 1 bis 4 zur Kabelendisolierung mit einem Füllstück, vorzugsweise aus plastischem Dichtungsmaterial,
mit Aussparungen zum Einlegen der abzudichtenden Kabel.

7. Verwendung eines schäumbaren Schmelzklebers nach den
Ansprüchen 1 bis 4, ohne Trägerelemente als Formlinge
oder Bänder.

8. Verwendung eines schäumbaren Schmelzklebers nach den Ansprüchen 1 bis 4 zum Abdichten, z. B. in der Baubranche zum Abdichten von Fenstern und Türen oder zum Ausfüllen beliebiger Zwischenräume.

9. Verwendung eines schäumbaren Schmelzklebers nach Anspruch 8, d a d u r c h   g e k e n n z e i c h n e t , daß der Schmelzkleber einseitig auf einer Folie aufgetragen ist.